# EUROPEAN PATENT APPLICATION

(11) **EP 3 582 526 A1**
(43) Date of publication of application: **18.12.2019**
(21) Application number: 18000532.4
(22) Date of filing: 15.06.2018
(51) Int. Cl.: H04W 8/20, H04W 8/26

(54) **MOBILE SUBSCRIPTION PROFILE GENERATION AND PROVISIONING**

(71) Applicant: Giesecke+Devrient Mobile Security GmbH, 81677 München (DE)
(72) Inventor: Morawietz, Andreas, 81377 München (DE); Nitsch, Nils, 85570 Markt Schwaben (DE); Huber, Ulrich, 81475 München (DE); Wimböck, Ulrich, 82327 Tutzing (DE)

(57) **Abstract**

The present invention presents A method, in a system comprising a data preparation server (DP; DP+), for generating a profile to be downloaded to a UICC hosted in a device of an End-User, the method comprising the steps:
a) At the data preparation server (DP; DP+), generate a Matching ID which is independent of a device type of the device and of a UICC type of the UICC;
b) Providing the generated Matching ID to the End-User providing of the device and the UICC and wishing to be provided with a profile;
c) At the data preparation server (DP; DP+), receive from the End-User a request for downloading a profile to the UICC and the following information: c1) UICC information on the UICC and c2) device information on the device hosting the UICC and c3) the Matching ID provided to him/her in step b);
d) At the data preparation server (DP; DP+), in reaction to receipt of the information provided in step c), generate a profile matching with the information provided in step c).

## Description

### Field of the invention

The present invention relates to the field of mobile subscription profiles, the profiles constructed to be hosted in a UICC which are in turn hosted in a device, and the profiles constructed to enable communication with the device in mobile networks. The present invention further relates to provisioning servers, such as GSMA SM-DP+, for provisioning profiles to UICCs. More precisely, the present invention relates to a method for profile generation at a UICC provisioning server DP+, and for provisioning of a generated profile to a UICC. Within the device hosting the UICC or within the UICC, a Local Profile Assistant LPA can be installed so as to receive profiles provisioned to the UICC via the device. The LPA enables establishment and operation of secured data sessions between the UICC and the UICC provisioning server (DP+). The UICC in the present invention can have any suitable form factor such as for example that of a plug-in UICC or SIM card, an embedded UICC or eUICC, or a (future) integrated UICC or iUICC integrated into one or several device chips of the device hosting the UICC.

### Prior Art and background of the invention

A system as described above, or at least part of it, is known from documents
[1][SGP.21] GSMA "RSP Architecture, Version 2.2, 01 September 2017*"* and
[2][SGP.22] GSMA "RSP Technical Specification, Version 2.2, 01 September 2017*"*

One core element in the RSP Architecture according to [1] is the data preparation plus DP+ server which combines in itself the functions of a data preparation server DP and the subscription management Secure Router SM-SR. In previous versions of [1], DP and SM-SR used to be two separate servers.

The DP+ combines two functions in one server. The first function of data preparation plus DP+ is that of data preparation (also called: data generation) (formerly done by DP), that is the generation of Profiles for later download and installation to UICCs (in [1], [2] titled eUICC). The Profiles are generated at the data preparation plus DP+ in communication and interaction with MNO servers.

The data preparation plus DP+ server known from the prior art [1], [2] generates ready-made profiles in advance, without knowing the type of device and type UICC to which the generated profile will later be provisioned. On the other hand, profiles are customized with respect to the device and/or UICC for which they are intended. The purpose of the customization is to assure compliance of the profile with specific features and requirements of the device and/or UICC to which the profile will be provisioned. More precisely, device type specific and UICC type specific information is used in the process of data preparation, such that each generated profile is specific to a type of device and/or to a type of UICC. Thus, for each profile (e.g. a profile for a particular mobile network operator MNO), there exist as many distinct customized possible profile instances, or so-called "profile types", as there are combinations of device types and UICC types to be considered.

In order to have profiles compliant with all relevant different types of devices and UICCs, technical specification [2][SGP.22] chapter 3.1.1.1 and Annex F Profile Elegibility Check) indicate two solutions.

According to a first solution, static eligibility check, the data preparation plus DP+ server generates of as many distinct customized instances, or "profile types", of a profile as there are combinations of device types and UICC types. Once the type of device and type of UICC of the device/UICC combination are known to which the profile is to be downloaded, the required profile type is known and is notified to the DP+ which downloads the suitable profile type to the UICC. Providing several profile types for each profile requires large amounts of memory and computing resources. In addition, this solution is rather inflexible. New device types and/or new UICC types entering into the market after the time of preparation of the inventory of profile types cannot be provisioned out of the pre-generated inventory. Only after an update period, also profile types of these new device/UICC types will be available as ready-made profiles.

According to a second known solution, dynamic eligibility check, a profile is generated, therein considering some device type and some UICC, and is downloaded from the data preparation plus DP+ server to a UICC hosted in the device. In case of mismatch of the downloaded profile with the type of the device and/or the type of the UICC, the downloaded profile is amended or adapted after download, inside the UICC, via commands sent from DP+ to UICC. Adaption of profiles via commands after download is cumbersome, slow and costly. The dynamic eligibility check solution is, however, suited also for newly introduced device and/or UICC types.

On the occasion of a profile download event to a UICC hosted in a device of an End-User, according to technical specification [2][SGP.22] chapter 3.1.1. Figure 9, the data preparation plus DP+ server receives, from the End-User, via an Operator, information on device type (e.g. IMEI, device capabilities) and on UICC type (e.g. OS (operating system) version, ETSI/3GPP capabilities, e.g. type of the authentication algorithm Milenage or TUAK, GP (Global Platform) capabilities, NFC capabilities) and/or on Profile type. Upon receipt of this type information, the DP+ generates a Matching ID corresponding to a profile type matching with the type information received from the End-User and/or Operator. The Matching ID is provided only for the present particular download event.

The Matching ID is provided to the End-User, e.g. by sending or handing out to the End-User a Voucher on which the Matching ID is printed.

The End-User, by sending the Matching ID to the data preparation plus DP+ server, triggers download of a profile type matching with the End-User's device/UICC type to his/her UICC via provisioning (ES9+) download.

### Objective of the invention

It is an object of the present invention to provide a method which enables generation and provisioning of profiles for UICCs in a manner that is flexible and at the same time efficient.

### Summary of the invention

The object of the invention is achieved by a method with the features according to claim 1. Claim 8 discloses, based on the solution of claim 1, a solution for new or second profile generation for an End-User who already has previously applied for profile generation with a different UICC/ device combination. Claim 9 discloses an alternative solution for generating a new or second profile. Claim 11 discloses, bases on the solution of claim 1, a solution for batch enablement of Merchants, so that the Merchants can later offer generation and provisioning of single profiles to multiple users. Embodiments of the invention are presented in dependent claims.

In greater detail, the method is constructed for a system comprising a data preparation server, such as a DP or a DP+. The aim of the method is generating a profile to be downloaded to a UICC hosted in a device of an End-User. The method comprising the following steps.
a) At the data preparation server, generate a Matching ID which is independent of a device type of the device and of a UICC type of the UICC. A traditional Matching ID would - in contrast - be directly related to a particular combination of device type and UICC type. The inventive Matching ID doesn't even require a generated profile to be present already. On the contrary, preferably generating a first Matching ID of a particular End-User is done before generating a first profile of the End-User, such that the (very) first Matching ID of an End-User is generated without a profile being present.
b) Providing the generated Matching ID to the End-User providing of the device and the UICC and wishing to be provided with a profile to his/her UICC or device/UICC combination.
c) At the data preparation server, receive from the End-User a request for downloading a profile to the UICC and the following information: c1) UICC information on the UICC and c2) device information on the device hosting the UICC and c3) the Matching ID provided to him/her in step b). Traditionally, in step c) receiving only the Matching ID from the End-User would be done and would be sufficient. In addition, traditionally, as a next step, the data preparation server would retrieve a suitable ready-made generated profile from its inventory. In the invention, instead step d) is done.
d) At the data preparation server, in reaction to receipt of the information provided in step c), generate a profile matching with the information provided in step c).

By the method according to claim 1, the data preparation server can generate a customized profile for a particular UICC or for a particular device or for a particular combination of a particular UICC and a particular device, on-the-fly, only upon request for a profile by the End-User. Generation of an entire inventory of profile types, so as to cover (hopefully) all possible, or at least all relevant, UICC/device combinations is not required. Generation of one single customized profile is sufficient. Further, profile preparation is done only in a situation when UICC information on the UICC to provisioned and device information on the device hosting the UICC are already known to the data preparation server.

In the method of claim 8, at least one profile has in the past been generated with a method according to claim 1. The user requests for a profile for a new device or/and new UICC. Steps a)-c) are performed essentially similarly as in claim 1 for the original, first profile. In step c), the End-User provided to the data preparation server type information on the new device or/and new UICC, and the original Matching ID. In step d)-2), at the data preparation server, in reaction to receipt of the information provided in step c), the data preparation server, instead of entirely newly creating a profile, adapts the already present profile, that has previously been generated for the previous device and/or previous UICC, with the new UICC type information and/or new device type information for the second UICC/device combination. By said adaption, a second profile is generated that matches with the to the second device and second UICC. The Matching ID is - optionally - used as an identifier to retrieve the original or first profile.

According to an alternative method to the method of claim 8, and which is claimed in claim 9, a second Matching ID is generated at the data preparation server. The End-User provided to the data preparation server the second matching ID and the type information on the second or new device and/or UICC and adapts the first profile based on this information.

In some embodiments of the invention, in step a) and/or step a)-2) multiple Matching IDs are generated - in a batch - and are provided to a Merchant (including distribution the generated Matching IDs to one or several Merchants). In step b), or/and in step b)-2), the Matching ID is provided to the End-User in that the Merchant provides the Matching ID to the End-User. Further on, profile generation is initiated by the End-User by a method according to the principle of claim 1 or 8.

The device information comprises one or several of the following: EID, IMEI, device manufacturer, .... The UICC information comprises one or several of the following: OS (operating system) version, ETSI/3GPP capabilities, type of the authentication algorithm Milenage or TUAK, GP (Global Platform) capabilities, NFC capabilities, UICC manufacturer, ....

According to some preferred embodiments, the Matching ID is assigned to the End-User. Traditionally the Matching ID is assigned to one particular profile. In the present preferred embodiments, instead, the Matching ID is assigned to the End-User. Preferably, the method of claim 8 is combined with this feature combination of an End-User assigned Matching ID.

According to some preferred embodiments, the Matching ID is not assigned to one particular profile and can be assigned to multiple profiles of the same End-User. Due to this feature, an End-User can apply for multiple profiles under the same Matching ID. Particularly, the Matching ID can, in the method of claim 8, be used as an identifier to retrieve the first profile (generated according to claim 1), so as enable adaption of the first profile to generate the second profile, using the type information on the second device or/and UICC.

The method preferably further comprises provisioning the generated profile to the UICC, e.g. via a known provisioning path such as ES9+.

The End-User can be a natural or juristic person or an instance.

The method preferably further comprises keeping the generated profile stored at the data preparation server. This step is preferred so as to enable later generation (= preparation) of the second profile by means of adaption of the first profile. Further preferably, the first profile is stored together with the Matching ID. This enables retrieval of the first profile when, later, the End-User requests download of a new/second (third, fourth, ...) profile for a new/ second (third, fourth, ...) device and/or new/second (third, fourth,...) device, and the new profile is generated by adaption of the first profile.

The UICC can have a form factor of either one of: a plug-in UICC card; an embedded UICC (eUICC); an integrated UICC (iUICC).

### Brief description of the drawings

Embodiments of the invention will now be described with reference to the accompanying drawings, throughout which like parts are referred to by like references, and in which represents:
- Fig. 1: a schematic diagram showing profile preparation according to embodiments of the invention;
- Fig. 2: a schematic diagram showing preparation of a second profile based on the previously generated profile, according to embodiments of the invention;
- Fig. 3: a schematic diagram showing batch generation of Matching IDs, distribution to Merchants, and subsequent generation of a profile for one Matching according to embodiments of the invention ID.

### Detailed description of the invention

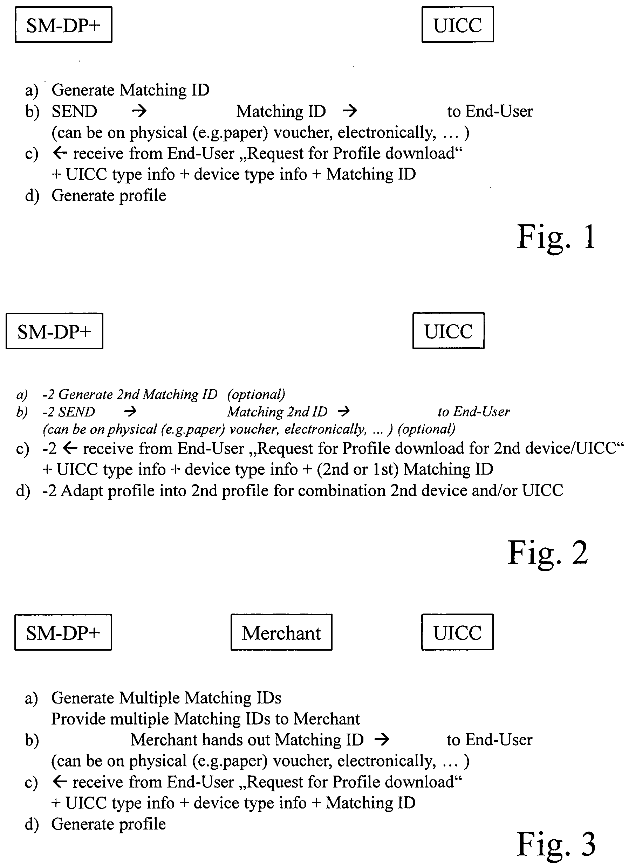

Fig. 1 shows a schematic diagram showing profile preparation according to embodiments of the invention. The profile preparation is performed in a system comprising a Subscription Management DP+ server, such as the SM-DP+ according to documents [1] and [2], and a UICC, such as the eUICC according to documents [1] and [2].

The use case of Fig. 1 is that an End-User requests for a profile for the first time with a particular MNO or other use architecture. In a step a), the SM-DP+ generates a Matching ID, without already generating a profile. The SM-DP+ can subsequently to step a) generate a voucher on which the Matching ID is provided. This voucher can be a physical carrier of paper, card board or some other material, and the matching ID can be printed or otherwise transferred onto the carrier. The Matching ID can be contained on the voucher e.g. in plain text indicia (e.g. 1A234B5C67 or the like) or/and as a barcode or/ and 2D-barcode or/and QR-code. This voucher is sent or handed out to the End-User. In a subsequent step b), which can be largely later than step a), the SM-SP+ assures that the generated Matching ID is directly or indirectly provided to an End-User who is a holder of the UICC. The Matching ID can be provided in an suitable form. In a subsequent step c), the End-User sends to the SM-SP+ a request for Profile download. Together with this request, the End-User sends UICC type information on his/her UICC and device type information on his/her device hosting the UICC, as well as the previously received Matching ID (e.g. after reading it from the voucher). In a subsequent step d), the SM-DP+ generates (= prepares) a customized profile for the particular UICC and device for which the End-User sent to the SM-SP+ type information. Therein, the UICC type information UICC and device type information is processed within the process of profile generation, so as to generate the customized profile. After generation, the generated customized profile is downloaded from the SM-SP+ to the UICC. Further steps in the UICC can be done as known from the prior art.

Fig. 2 shows a schematic diagram showing preparation of a second profile based on the previously generated profile, according to embodiments of the invention. The use case of Fig. 2 is that the End-User already has requested for a profile for a device/UICC combination, and SM-DP+ has already prepared a profile, for example according the method depicted in Fig. 1. The End-User now has a different device or a different UICC or a different device and UICC and wishes to receive the similar profile he/she already has for the new UICC and/or device, so that he/she can continue the existing subscription with the new UICC/device. In the method of Fig. 2, most of the steps are performed similar to those explained on Figure 1, with the exception that the SM-DP+ already has a generated, ready customized profile for a device/UICC combination of the End-User. According to Fig. 2, the process of profile preparation starts with step a)-2), generation of a second Matching ID. As in the embodiments of Fig. 1, the Matching ID is generated in advance of profile preparation, independent of any already existing requests from End-Users for profiles. Also the second Marching ID can be put on a voucher, as in the embodiments of Fig. 1. Also the second Matching ID is, in step b)-2), provided to the End-User, e.g. on a voucher, e.g. via a Merchant, e.g. as outlined in reference to Fig. 2. In a subsequent step c).2), the End-User sends to the SM-SP+ a request for Profile download, now for the new UICC/device combination. Together with this request, the End-User sends UICC type information on his/her new UICC and/or device type information on his/her new device hosting the (new) UICC, as well as the second Matching ID. In a subsequent step d)-2), the SM-DP+ generates (= prepares) a customized profile for the particular new combination of new UICC and/or new device (or new UICC with old device or old UICC with new device) for which the End-User sent to the SM-SP+ type information. Therein, the SM-DP+ retrieves the first profile that the SM-DP+ has created earlier for the old UICC/device combination for the same End-User, and adapts the first profile with the type information received in step c)-2). After generation, the generated second customized profile is downloaded from the SM-SP+ to the UICC. Further steps in the UICC can be done as known from the prior art.

Fig. 3 shows a schematic diagram showing batch generation of Matching IDs, distribution to Merchants, and subsequent generation of a profile for one Matching according to embodiments of the invention ID.

The SM-DP+ generates, in a step a) (or similarly a)-2)) a whole batch of Multiple Matching IDs so as to create an inventory of Matching IDs. The Matching IDs are generated independently of any request for a profile from side of End-Users or Merchants. The generated Matching IDs are distributed to one or several Merchants. An End-User approaches the Merchant and requests a profile. The end user has a UICC and a device. The Merchant, in step b) (or b)-2) hands out to the End-User one single Matching ID, intended for the one single requested profile. The handing out can be, as described above in any suitable form, e.g. on a physical (paper, cardboard, ...) voucher, or also in electronic form. In step c) (or c)-2)), the End-User sends to the SM+DP+ a request for profile download, together with UICC and/or device type information and the Matching ID. In step d), the SM-DP+ generates a profile, either from the scratch using UICC/ device type information, as in Fig. 1, or by adapting an already existing profile, as in Fig. 2, using UICC and/or device type information. After generation, the generated second customized profile is downloaded from the SM-SP+ to the UICC. Further steps in the UICC can be done as known from the prior art.

### Cited documents

[1][SGP.21] GSMA "RSP Architecture, Version 2.2, 01 September 2017*"*
[2][SGP.22] GSMA "RSP Technical Specification, Version 2.2, 01 September 2017*"*

## Claims

1. A method, in a system comprising a data preparation server (DP; DP+), for generating a profile to be downloaded to a UICC hosted in a device of an End-User, the method comprising the steps:
a) At the data preparation server (DP; DP+), generate a Matching ID which is independent of a device type of the device and of a UICC type of the UICC;
b) Providing the generated Matching ID to the End-User providing of the device and the UICC and wishing to be provided with a profile;
c) At the data preparation server (DP; DP+), receive from the End-User a request for downloading a profile to the UICC and the following information: c1) UICC information on the UICC and c2) device information on the device hosting the UICC and c3) the Matching ID provided to him/her in step b);
d) At the data preparation server (DP; DP+), in reaction to receipt of the information provided in step c), generate a profile matching with the information provided in step c).

2. The method according to claim 1, wherein the device information comprises one or several of the following: EID, IMEI, device manufacturer.

3. The method according to claim 1 or 2, wherein the UICC information comprises one or several of the following: OS (operating system) version, ETSI/3GPP capabilities, e.g. type of the authentication algorithm Milenage or TUAK, GP (Global Platform) capabilities, NFC capabilities, UICC manufacturer.

4. The method according to any of claims 1 to 3, wherein the Matching ID is assigned to the End-User.

5. The method according to any of claims 1 to 4, wherein the Matching ID is not assigned to one particular profile and can be assigned to multiple profiles of the same End-User.

6. The method according to any of claims 1 to 5, further comprising provisioning the generated profile to the UICC.

7. The method according to any of claims 1 to 6, further comprising keeping the generated profile stored at the data preparation server (DP; DP+).

8. The method according to any of claims 1 to 7, further comprising generating a second profile for a second device and/or a second UICC of the End-User, generation of the second profile comprising the steps:
c)-2) At the data preparation server (DP; DP+), receive from the End-User a request for downloading a profile to the second device UICC and the following information: c1) UICC information on the second UICC and/or c2) device information on the second device hosting the second UICC and c3) the Matching ID provided to him/her in step b);
d)-2) At the data preparation server (DP; DP+), in reaction to receipt of the information provided in step c)-2), adapting the already present previously profile generated for the device and UICC to the second device and/or second UICC.

9. The method according to any of claims 1 to 7, further comprising generating a second profile for a second device and/or a second UICC of the End-User, generation of the second profile comprising the steps:
a)-2) At the data preparation server (DP; DP+), generate a second Matching ID which is independent of a device type of the second device and/or of a UICC type of the second UICC;
b)-2) Providing the generated second Matching ID to the End-User providing of the second device and/or the second UICC and wishing to be provided with a profile;
c)-2) At the data preparation server (DP; DP+), receive from the End-User a request for downloading a profile to the second device UICC and the following information: c1) UICC information on the second UICC and/or c2) device information on the second device hosting the second UICC and c3) the second Matching ID provided to him/her in step b)-2);
d)-2) At the data preparation server (DP; DP+), in reaction to receipt of the information provided in step c)-2), adapting the already present previously profile generated for the device and UICC to the second device and/or second UICC.

10. The method according to any of claims 1 to 9, wherein the UICC has a form factor of either one of: a plug-in UICC card; an embedded UICC (eUICC); an integrated UICC (iUICC).

11. The method according to any of claims 1 to 10, wherein in step a) and/or step a)-2) multiple Matching IDs are generated and are provided to a Merchant, and wherein in step b), or/and in step b)-2), the Matching ID is provided to the End-User in that the Merchant provides the Matching ID to the End-User.
